# EUROPEAN PATENT SPECIFICATION

(11) **EP 3 812 912 B1**
(45) Date of publication and mention of the grant of the patent: **22.03.2023**
(21) Application number: 19465581.7
(22) Date of filing: 22.10.2019
(51) Int. Cl.: G06F 13/42, G06F 13/38

(54) **METHOD OF SYNCHRONIZING A RECEIVER OF A SYNCHRONOUS SERIAL COMMUNICATION SYSTEM FOR A RECEIVING PROCESS OF A DATA FRAME OF A PREDEFINED FRAME SIZE FROM THE SYNCHRONOUS SERIAL COMMUNICATION SYSTEM, RECEIVER, TRANSMITTER AND SYSTEM**
VERFAHREN ZUR SYNCHRONISIERUNG EINES EMPFÄNGERS EINES SYNCHRONEN SERIELLEN KOMMUNIKATIONSSYSTEMS FÜR EINEN EMPFANGSPROZESS EINES DATENRAHMENS EINER VORDEFINIERTEN RAHMENGRÖSSE AUS DEM SYNCHRONEN SERIELLEN KOMMUNIKATIONSSYSTEM, EMPFÄNGER, SENDER UND SYSTEM
PROCÉDÉ DE SYNCHRONISATION D'UN RÉCEPTEUR D'UN SYSTÈME DE COMMUNICATION EN SÉRIE SYNCHRONE POUR UN PROCESSUS DE RÉCEPTION D'UNE TRAME DE DONNÉES D'UNE TAILLE DE CADRE PRÉDÉFINIE À PARTIR DU SYSTÈME DE COMMUNICATION EN SÉRIE SYNCHRONE, RÉCEPTEUR, ÉMETTEUR ET SYSTÈME

(43) Date of publication of application: 28.04.2021
(73) Proprietor: Continental Automotive Technologies GmbH, 30165 Hannover (DE)
(72) Inventor: Marta, Alin, 65824 Schwalbach a. Ts. (DE)
(74) Representative: Continental Corporation

(56) References cited:
- EP-A1- 1 909 440
- US-A- 4 199 663
- US-A1- 2012 140 673
- US-B2- 9 019 992

## Description

The invention is concerned with a method of synchronising a receiver of a synchronous serial communication system for a receiving process of a data frame of a predefined frame size from the synchronous serial communication system, a receiver, a transmitter and a system comprising at least one receiver and at least one transmitter.

In common digital networks data are arranged in data frames or packages. These data frames are sent via a connection between the sender and the receiver. To ensure the transmission between the sender and the receiver, it is necessary, that the receiver identifies the data frame in the data stream of the connection. This process of identification is called frame synchronization.

Common techniques for frame synchronisation comprise the use of sync words. Sync words are predefined characters at the beginning of a respective data frame. Symbol-level synchronization in Universal Asynchronous Receiver Transmitter (UART) is based on predefined bits at the start and at the end of a respective data frame.

In Serial Peripheral Interface (SPI) frame synchronisation is performed by using chip selection which uses a special line of the SPI bus system. Serial Peripheral Interface Bus systems comprise at least one SPI master device and at least one SPI slave device. The master device provides a clock signal on one wire of the SPI interface. The clock signal is used for synchronisation between the devices of the Serial Peripheral Interface Bus system. During communication the master sends the clock signal and selects the slave by a specific chip select signal.

For general purpose serial interfaces like Universal Asynchronous Receiver Transmitter (UART) or Serial Peripheral Interface (SPI), most microcontrollers do not have specialised hardware circuits for doing frame synchronisation on multi-byte frames. In case of Serial Peripheral Interfaces (SPI) the chip select line may be used for this purpose. But this is an additional hardware line which adds to the hardware cost. Classical frame synchronisation using sync words requires data to be parsed to detect the start of a predefined frame pattern. The need to parse data, if not done by hardware, puts a lot of load on the software therefore limiting the throughput of the communication channel due to latencies which need to be considered in design. In addition transmitting continuously without time often means that features like DMA transfer from serial peripheral to memory and vice versa are not possible to use because they require knowing a data size before the transfer starts.

US 2012/0140673 A1 disclosures an Inter-frame gap controller, traffic transmitter, transmission apparatus and an inter-frame gap control method. The inter-frame gap controller comprises an inter-frame gap length determiner that determines a length of an inter-frame gap based on traffic volume of Ethernet frames which are converted to synchronous frames and are transmitted over a synchronous network. The inter-frame gap controller comprises a gap inserter that inserts an inter-frame gap of length determined by said inter-frame gap length determiner between Ethernet frames which are converted from said synchronous frames.

US 9,019,992 B2 disclosures a joint retransmission and frame synchronisation for error resilience control. A method for controlling error resilience in network communication includes a determination of a packet gap representing a packet loss of a packet being communicated over a network, by a receiver-side controller. The receiver-side controller, issues a retransmission request for the at least one missing packet. If the packet gap is not filled within a first time period of the retransmission time-out, the receiver-side controller issues at least one synchronization frame request. A sender-side controller selects, to respond to at least one of either of the retransmission request or the at least one synchronization frame request.

JPH0753146A disclosures a local area network elevator communications network.

Document US 4 199 663 A discloses a data communication system which includes a plurality of terminals and a data bus. To prevent the simultaneous transmission of messages by two or more terminals, each terminal continuously monitors the data bus and is enabled to transmit a message only when the data bus has been silent, e.g., there is an absence of messages on the data bus, for a predetermined period of time which is unique to the terminal, and when a periodic transmission interval for the terminal has been reinitiated.

It is an object of the invention to provide a software based method of frame synchronisation without sync words.

The object is accomplished by the subject matter of the independent claims. Advantageous developments with convenient and non-trivial further embodiments of the invention are specified in the dependent claims, the following description, and the drawings.

The invention comprises a method of synchronising a receiver of a synchronous serial communication system for a receiving process of a data frame of a predefined frame size from the synchronous serial communication system. In other words, the invention provides a method of frame synchronization for the synchronous serial communication system. The synchronous serial communication system may comply with the Serial Peripheral Interface standard. A synchronisation process comprising a periodic monitoring of the synchronous serial communication system is performed by the receiver. The period of the periodic monitoring has a predefined reception gap time during which the receiver buffers bytes received over the synchronous serial communication system. At the end of each period of the periodic monitoring of the synchronous serial communication system, the respective period is checked for reception of at least one byte by the receiver until a period with no reception of any bytes is detected by the receiver. In other words, the receiver periodically monitors the synchronous serial communication system as long as a period without a reception is detected by the receiver. When a period with no reception of any bytes is detected by the receiver, a frame reception process to receive the data frame of the synchronous serial communication system is initiated by the receiver. In other words, synchronisation of the data frame is performed by the use of the predefined reception gap time. The invention gives the advantage that synchronisation may be performed without an additional data line.

The invention also comprises embodiments that provide additional technical advantages.

According to a further embodiment of the invention, the synchronisation process is performed upon termination of a reception of a preceding data frame via the synchronous serial communication system by the receiver. In other words, the receiver initiates the synchronisation process once the reception of the preceding data frame has been completed. The invention has the advantage that the frame synchronisation for receiving the next data frame is performed right after a reception of a previous data frame. It may be possible that the receiver receives the preceding data frame. When the predefined frame size is reached, the receiver may start the synchronisation process to detect the predefined reception gap time.

According to a further embodiment of the invention, the preceding data frame is considered valid and forwarded to a higher or lower layer of a communication model on initialisation of or during the frame reception process by the receiver. In other words, it is intended to buffer the preceding data frame after the reception until the predefined reception gap time is detected by the receiver. Upon reception of the predefined reception gap time, the preceding data frame is forwarded by the receiver. The preceding data frame is forwarded to a communication layer that differs from the current communication layer. The embodiment gives the advantage that the end of a data frame may be signalized by the first reception gap time after the reception of the data frame. As an example, the preceding data frame may be received by the receiver. The receiver may buffer the preceding data frame, received during the frame reception process. Upon termination of the frame reception process the receiver may initiate the synchronisation process again to detect the predefined reception gap time. When the predefined reception gap time is detected by the receiver, the preceding data frame may be considered valid and forwarded to the higher layer or to the lower layer by the receiver.

According to a further embodiment of the invention, the receiver is set up to receive the data frame with a predefined frame size during the frame reception process. In other words, during the frame receiving process, the receiver is in a state in which it is adapted to receive the data frame having the predetermined frame size from the synchronous serial communication system. The invention has the advantage that the reception of the data frame is enabled in the frame reception process. As an example, the receiver may be set up to receive data with the predefined frame size to receive the data frame.

According to a further embodiment of the invention the frame reception process is terminated by the receiver after the reception of the data frame with the predefined frame size. In other words, the frame reception process is terminated when the reception of the data frame is completed. The invention has the advantage that the receiver may initiate another process after the reception of the data frame.

As an example, the receiver may end the reception process when data in the amount of the frame size is received by the receiver.

According to a further embodiment of the invention, the periodic monitoring of the synchronous serial communication system is performed by the receiver again once the frame reception process is completed. In other words, after the reception of the data frame the receiver initiates the synchronisation process to monitor the synchronous serial communication system for a next predefined reception gap time. The invention has the advantage that the reception gap time following a data frame may be used as a stop marker.

According to a further embodiment of the invention, it is intended that upon elapse of a predefined transmission gap time, a presence of a transmitter request to transmit the data frame is periodically checked by a transmitter of the synchronous serial communication system. Upon presence of the transmitter request, a transmission process to transmit the data frame to the synchronous serial communication system is initialised by the transmitter. Upon termination of the transmission process the transmission gap time is waited again by the transmitter. In other words, the transmitter of the synchronous serial communication system waits until the predefined transmission gap time has expired. After the predefined transmission gap time the transmitter monitors the presence of the transmit request. The presence of the transmit request indicates that the data frame has to be transmitted by the transmitter. When the receiver detects the transmit request, the transmitter initialises the transmission process to transmit the data frame to the synchronous serial communication system. When the transmission of the data frame has ended, the transmitter waits until the transmission gap time has expired. Upon elapse of the transmission gap time, the transmitter monitors the presence of the transmit request again. The embodiment gives the advantage that the transmission gap time ensures a synchronisation between the transmitter and the receiver. It may be possible that the transmitter is connected to the receiver by the synchronous serial communication system. The transmitter may be configured to send the data frame to the synchronous serial communication system. The transmitter may receive the data frame from another device. As soon as another device sends data for transmission by the transmitter, the transmit request may be created or changed. The transmitter may send the data frame, when the transmit request is present or when the transmit request has a specific value. In order to ensure compliance with the reception gap time between successive data frames, the monitoring of the transmit request may be paused in the length of the predefined transmission gap time. Therefore, a lower time limit between the transmissions of successive data frames is set by the predefined transmission gap time.

The invention comprises a receiver of a synchronous serial communication system. The receiver is configured to perform a synchronisation process comprising a periodic monitoring of the synchronous serial communication system. A period of the periodic monitoring is a predefined reception gap time. The receiver is configured to check a respective period for a reception of at least one byte by the receiver at the end of each period of the periodic monitoring until a period with no reception of any byte is detected. The receiver is configured to initiate a frame reception process to receive the data frame of the synchronous serial communication system, when a period with no reception of any byte is detected. The invention comprises a system based on a transmitter of a synchronous serial communication system. The transmitter is configured to periodically check the presence of the transmit request to transmit the data frame upon elapse of the predefined transmission gap time. The transmitter is configured to initialise the transmission process to transmit the data frame to the synchronous serial communication system upon presence of transmit request. The transmitter is configured to wait the transmission gap time again upon termination of the transmission process.

The system comprises at least one transmitter and at least one receiver.

In the following an exemplary implementation of the invention is described. The figures show:
- Fig. 1: a method of synchronising a receiver of a synchronous serial communication system for a receiving process of a data frame;
- Fig. 2: a method of sending the data frame by a transmitter;
- Fig. 3: a timeline of a process of data frame transmission from the transmitter to the receiver; and
- Fig. 4: a timeline of a periodic monitoring performed by the receiver.

In the figures elements that provide the same function are marked with identical reference signs.

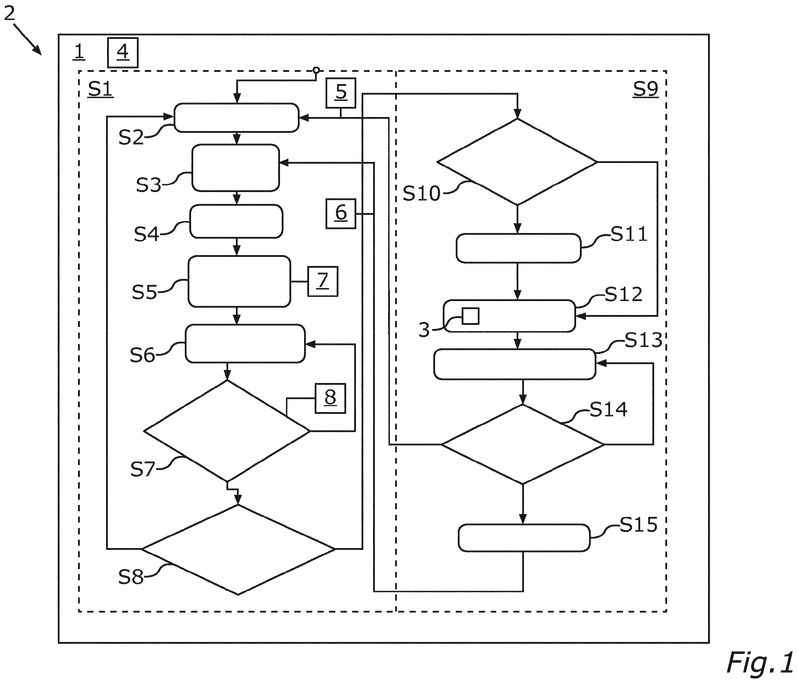

Fig. 1 shows a method of synchronising a receiver 1 of a synchronous serial communication system 2 for a receiving process of a data frame 3 of a predefined frame size 4 from the synchronous serial communication system 2. At start-up of the receiver 1 or after the reception of an error signal 5 by the receiver 1, the synchronisation process S1 may be initialised by the receiver 1. The synchronisation process S1 comprises a periodic monitoring of the synchronous serial communication system 2 by the receiver 1. In the 1st step S2 of the synchronisation process S1 a parameter DATAAVAILABLE that indicates that a preceding data frame 6 is cached by the receiver 1 may be set to a state NO. In the following step S3, the receiver 1 may clear previous reception events related to a reception of the preceding data frame 6. In step S4 the receiver 1 is set up for a reception of at least one byte. In the step S5 a reception gap timer 7 of the receiver 1 starts a countdown of a predefined reception gap time 8. The receiver 1 waits until the predefined reception gap time 8 has expired (S6, S7). At the end of each period of the periodic monitoring of the synchronous serial communication system 2, the respective period is checked for the reception of at least one byte by the receiver 1 until a period with no reception of any byte is detected by the receiver 1 (S8). If at least one byte is received from the receiver 1 during a period, the data received in that period is discarded and the receiver 1 proceeds to step S2. Upon detection of a period without a reception, the receiver 1 ends the synchronisation process S1 and starts a frame reception process S9.

In the first step S10 of the frame reception process S9 the receiver 1 may check the state of the parameter DATAAVAILABLE to check the presence of the preceding data frame 6. If the state of the parameter DATAAVAILABLE is YES, the preceding data frame 6 may be saved in a memory of the receiver 1. In that case, the preceding data frame 6 may be considered correct and forwarded to an upper layer by the receiver 1 (S11). After the forwarding, the receiver 1 may be set up to receive the data frame 3 with the predefined frame size 4 or any error (S12). In other words, the receiver 1 may be set in a state for the reception of the data frame 3. If the state of the parameter DATAAVAILABLE is NO, the receiver 1 may continue with step S12. In a step S13, the receiver 1 may receive the data frame 3. The receiver 1 may periodically check, whether the reception of the data frame 3 has finished (S14). If the receiver 1 receives an error signal during step S13, the receiver 1 may discard all parts of the data frame 3 it has received so far in this session, send the error signal 5 and continue with step S2. If the reception process has been successfully completed, the data frame 3 can be buffered by the receiver 1. In step S15 the receiver 1 may set the value DATAAVAILABLE to YES, to signal, that the data frame 3 is cached by the receiver 1. After step S15, the receiver 1 may proceed with step S3.

The invention may be configured as a software algorithm for frame synchronization on SPI. The data frame 3 in this context may consist of a group of bytes of the fixed, predefined data fixed frame size 4. Sequential data frames 3 may be separated by a minimum inter-frame time. On receiver side (see Fig.1), the algorithm searches for a bus idle timegap of minimum predefined duration after each reception of a data frame. The minimum predefined duration is defined as the predefined reception gap time 8.

As seen in the activity diagram in Fig. 1, at start up, after a reception of the error signal 5 and after a successful reception of the preceding data frame 6, the receiver 1 may be cleared of all previous reception events. The receiver 1 is set up to detect the reception of at least one byte (S2 to S4). Then the reception gap timer 7 of the receiver 1 is started to count down the predefined reception gap time 8 (S5). The timer may be any general-purpose timer of a microcontroller or a software timer. Hence the bus is monitored during the predefined reception gap time 8 for any activity. When the timer expires (S7), the state of reception is checked (S8). If there was any reception event detected during the predefined reception gap time 8 (reception of at least one byte or reception error), the received data is discarded (S2) by the receiver 1 and the receiver 1 is set up again to detect at least one byte and reception errors. The reception gap timer 7 is started again (S2 to S5). These steps are repeated until a time-gap is found. So, for as long as the communication is erroneous or de-synchronized, the algorithm will search for an idle time of at least the predefined reception gap time 8 with the purpose of re-synchronizing with the transmitter. If there was no reception event during the predefined reception gap time 8 and a complete preceding data frame 6 of the predefined data frame size 4 was received, then the preceding data frame 6 is considered correct by the receiver 1 and forwarded to an upper layer (S10, S11). Afterwards, reception is setup to trigger at reception of the complete data frame of the predefined frame size or on any reception error (S12). If this reception succeeds without error, the data frame is considered valid (S14, S15) and the searching for gap time is restarted (S2) to (S8). If there were reception errors after setup of FrameSize bytes reception (S4), the data is discarded (S2) and searching for gap time is restarted (S3 to S7).

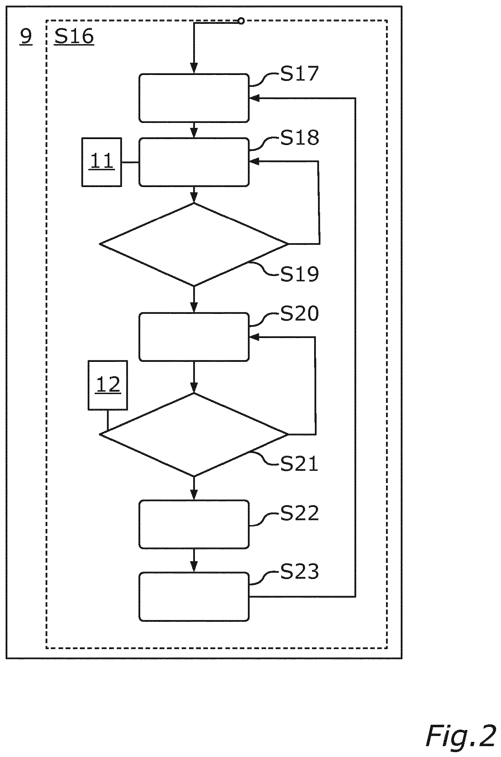

Fig. 2 shows a method of sending the data frame 3 by the transmitter 9. In a first step of the transmission method S16 the transmitter 9 may start a transmission gap timer 11 to countdown a predefined transmission gap time 10 (S17). The transmitter 9 may wait until the predefined transmission gap time 10 has elapsed S18. Upon elapse of the predefined transmission gap time 10, a presence of a transmit request 12 to transmit the data frame 3, may be checked by the transmitter 9 of the synchronous serial communication system 2 (S20, S21). Upon presence of the transmit request 12 a transmission process to transmit the data frame 3 to the synchronous communication system 2 may be initialised by the transmitter 9 (S22, S23). Upon termination of the transmission process, the transmitter may proceed with step S17.

On transmitter side (Fig. 2), a time gap of minimum predefined transmission gap time 10 may be inserted before each data frame 3, transmitted by the transmitter 9 (S17 to S19). Time may be counted from the end of the previously transmitted preceding data frame 6 or from system start up (S17 and S23). The values of these parameters are chosen such that the predefined transmission gap time 10 is bigger than the predefined reception gap time 8.

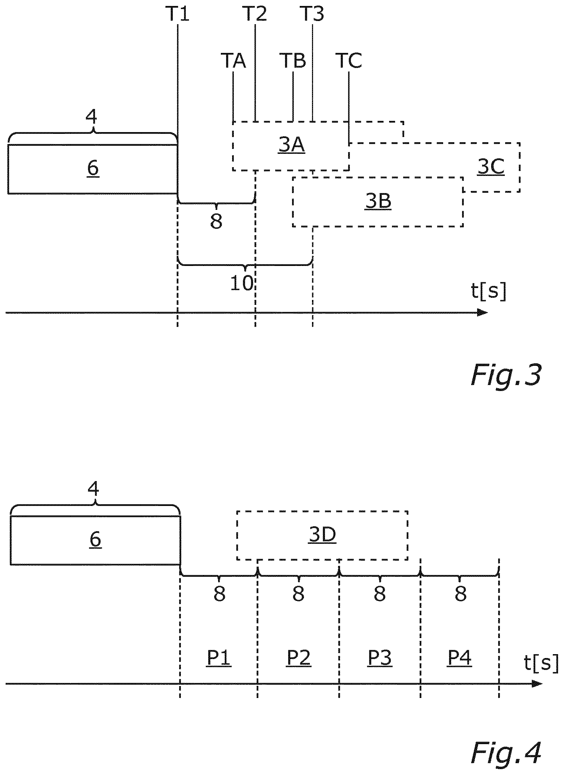

Fig. 3 shows a timeline of a process of data frame transmission from the transmitter 9 to the receiver 1. At T1 a transmission of the preceding data frame 6 with the predefined frame size 4 may finish. Therefore, the receiver 1 starts to wait until the predefined reception gap time 8 has finished and the transmitter 9 may wait until the predefined transmission gap time 10 has finished. At the moment T2, the predefined reception gap time 8 has elapsed and the receiver 1 is set up to receive the data frame 3. During the predefined reception gap time 8 (T1 to T2) the receiver is set to discard any data received during the predefined reception gap time 8. For example, if the receiver receives a data frame 3A at TA the respective data frame 3A is discarded by the receiver 1 because TA is before T2. After T2 the receiver 1 is ready to receive a data frame 3B with the predefined frame size 4. After the predefined transmission gap time 10 the transmitter 9 checks for the presence of the transmit request 12 and send a data frame 3C to the receiver 1. The system may comprise a predefined number of receivers 1. The predefined transmission gap time 10 and the predefined reception gap time 8 may depend on the receiver 1, which has to be addressed by the data frame 3.

Fig. 4 shows a timeline of a periodic monitoring performed by the receiver 1. After a reception of the preceding data frame 6 with the predefined frame size 4 the receiver 1 may initiate the periodic monitoring. The periods (P1 to P4) of the periodic monitoring have the predefined reception gap time 8. During the first period P1, the receiver 1 receives at least one byte of a data frame 3D. As the byte is received before the end of the first period P1, the receiver discards the data of the data frame 3D. After period P3, the receiver detects a period P4 without a reception of any byte. Therefore the receiver 1 is set up to receive the data frame 3 with a predefined frame size 4.

According to the state of the art frame synchronization may be performed using sync words (a unique character or set of characters is placed inside the data frame, usually at the beginning of the frame) or by hardware (for example in Ethernet or CAN). Frame synchronization in UART comprises symbol-level synchronization, using start bits. Frame synchronization on SPI uses the chip select connection.

For general purpose serial interfaces, like UART or SPI, most microcontrollers do not have specialized hardware circuits for doing frame synchronization on multi-byte frames. In case of SPI, the chip select line may be used for this purpose, but this is an additional hardware line, which may increase hardware cost. Classical Frame synchronization using sync words requires data to be parsed to detect the start of the respective data frame pattern.

The need to parse data, if not done by hardware, puts a lot of load on the software, therefor limiting the throughput of the communication channel, due to latencies which need to be considered in design. In addition, transmitting continuously, without time gap, often means that features like DMA transfer (from serial peripheral to memory and vice-versa) are not possible to use, because they require knowing the data size before the transfer starts.

This invention addresses the need for a simple SPI Frame synchronization protocol, build in software, to avoid using the chip select line. The invention enables the usage of maximum throughput on the SPI interface with DMA, due to the fixed size of a multi-byte frame. The invention avoids the need to search for the sync word by software.

The SPI chip select signal is not necessary anymore, resulting in reduced hardware cost. Bursts of reception errors do not lead to interrupt overload of the CPU, because the minimum time between interrupts is the predefined reception gap time 8. The invention enables the usage of DMA for reception because the transfer size is known (predefined data frame size 4), which may improve performance and decrease CPU load. Resynchronizing after error does not require parsing data to look for a synchronization word. This saves CPU time.

Overall, the example shows how a software frame synchronization algorithm for fixed-size multi-byte data on SPI is provided by the invention.

## Claims

1. Method of synchronizing a receiver (1) in a synchronous serial communication system (2) for receiving a data frame (3) of a predefined frame size (4) over the synchronous serial communication system (2), wherein
a synchronisation process comprising a periodic monitoring of the synchronous serial communication system (2) is performed by the receiver (1),
**characterized in that**
in the periodic monitoring the receiver (1) is set up for a reception of at least one byte and
- a respective period of the periodic monitoring has a predefined reception gap time (8), during which the receiver (1) buffers bytes received over the synchronous serial communication system (2), and
- the receiver (1) waits until the predefined reception gap time (8) has expired and at the end of each period of the periodic monitoring of the synchronous serial communication system (2), the respective period is checked for a reception of at least one byte by the receiver (1),
until a period with no reception of any byte is detected by the receiver (1), and then
- a frame reception process to receive the data frame (3) of the synchronous serial communication system (2) is initiated by the receiver (1).

2. Method according to claim 1,
**characterized in that**
the periodic monitoring of the synchronous serial communication system (2) is performed upon termination of the reception of a preceding data frame (6) via the synchronous serial communication system (2) by the receiver (1).

3. Method according to claim 2,
**characterized in that**
upon initialisation of or during the frame reception process, the preceding data frame (6) received via the synchronous serial communication system (2) by the receiver (1) is considered valid and forwarded to a higher or lower layer of a communication model.

4. Method according to one of the preceding claims,
**characterized in that**
for the frame reception process, the receiver (1) is set up to receive the data frame (3) with the predefined frame size (4).

5. Method according to claim 4,
**characterized in that**
after the reception of the data frame (3) with the predefined frame size (4), the frame reception process is terminated by the receiver (1).

6. Method according to claim 5,
**characterized in that**
upon termination of the frame reception process, the periodic monitoring of the synchronous serial communication system (2) is performed by the receiver (1) again.

7. Method according to one of the preceding claims,
**characterized in that**
- upon elapse of a predefined transmission gap time (10), a presence of a transmit request to transmit a data frame (3) is periodically checked by a transmitter (9) of the synchronous serial communication system (2),
- upon presence of the transmit request, a transmission process to transmit the data frame (3) to the synchronous serial communication system (2) is initialized by the transmitter (9), and
- upon termination of the transmission process, the transmission gap time (10) is waited again by the transmitter (9).

8. Receiver (1) of a synchronous serial communication system (2), wherein the receiver (1) is configured to perform a synchronisation process comprising a periodic monitoring of the synchronous serial communication system (2),
**characterized in that**
- in the periodic monitoring the receiver (1) is set up for a reception of at least one byte and a respective period of the periodic monitoring has a predefined reception gap time (8), during which the receiver (1) buffers bytes received over the synchronous serial communication system (2), and
- the receiver (1) is configured to wait until the predefined reception gap time (8) has expired and to check a respective period for a reception of at least one byte by the receiver (1) at the end of each period of the periodic monitoring of the synchronous serial communication system (2),
until a period with no reception of any byte is detected, and
- the receiver (1) is configured to initiate a frame reception process to receive the data frame (3) of the synchronous serial communication system (2).

9. Synchronous serial communication system (2), comprising at least one receiver according to claim 8 and at least one transmitter (9), wherein
the transmitter (9) is configured to
- periodically check a presence of a transmit request to transmit a data frame (3), upon elapse of a predefined transmission gap time (10),
- initialize a transmission process to transmit the data frame (3) to the synchronous serial communication system (2) upon presence of the transmit request, and
- wait the transmission gap time (10) again upon termination of the transmission process.

## Patentansprüche

1. Verfahren zur Synchronisierung eines Empfängers (1) in einem synchronen seriellen Kommunikationssystem (2) zum Empfangen eines Datenrahmens (3) einer vordefinierten Rahmengröße (4) über das synchrone serielle Kommunikationssystem (2), wobei
ein Synchronisierungsprozess, der eine periodische Überwachung des synchronen seriellen Kommunikationssystems (2) umfasst, vom Empfänger (1) durchgeführt wird,
**dadurch gekennzeichnet, dass**
der Empfänger (1) bei der periodischen Überwachung für einen Empfang mindestens eines Bytes eingerichtet ist, und
- eine jeweilige Periode der periodischen Überwachung eine vordefinierte Empfangslückenzeit (8) aufweist, während der der Empfänger (1) Bytes puffert, die über das synchrone serielle Kommunikationssystem (2) empfangen werden, und
- der Empfänger (1) wartet, bis die vordefinierte Empfangslückenzeit (8) abgelaufen ist, und am Ende jeder Periode der periodischen Überwachung des synchronen seriellen Kommunikationssystems (2) die jeweilige Periode auf einen Empfang mindestens eines Bytes durch den Empfänger (1) überprüft wird,
bis vom Empfänger (1) eine Periode ohne Empfang eines Bytes erkannt wird, und dann
- ein Rahmenempfangsprozess zum Empfangen des Datenrahmens (3) des synchronen seriellen Kommunikationssystems (2) vom Empfänger (1) initiiert wird.

2. Verfahren nach Anspruch 1,
**dadurch gekennzeichnet, dass**
die periodische Überwachung des synchronen seriellen Kommunikationssystems (2) nach Beendigung des Empfangs eines vorhergehenden Datenrahmens (6) über das synchrone serielle Kommunikationssystem (2) durch den Empfänger (1) durchgeführt wird.

3. Verfahren nach Anspruch 2,
**dadurch gekennzeichnet, dass**
der über das synchrone serielle Kommunikationssystem (2) durch den Empfänger (1) empfangene vorhergehende Datenrahmen (6) bei Initialisierung oder während des Rahmenempfangsprozesses als gültig erachtet und an eine obere oder untere Schicht eines Kommunikationsmodells weitergeleitet wird.

4. Verfahren nach einem der vorhergehenden Ansprüche,
**dadurch gekennzeichnet, dass**
der Empfänger (1) für den Rahmenempfangsprozess so eingerichtet ist, dass er den Datenrahmen (3) mit der vordefinierten Rahmengröße (4) empfängt.

5. Verfahren nach Anspruch 4,
**dadurch gekennzeichnet, dass**
der Rahmenempfangsprozesses nach dem Empfang des Datenrahmens (3) mit der vordefinierten Rahmengröße vom Empfänger (1) beendet wird.

6. Verfahren nach Anspruch 5,
**dadurch gekennzeichnet, dass**
nach Beendigung des Rahmenempfangsprozesses wieder die periodische Überwachung des synchronen seriellen Kommunikationssystems (2) vom Empfänger (1) durchgeführt wird.

7. Verfahren nach einem der vorhergehenden Ansprüche,
**dadurch gekennzeichnet, dass**
- bei Ablauf einer vordefinierten Sendelückenzeit (10) ein Vorhandensein einer Sendeanforderung zum Senden eines Datenrahmens (3) periodisch von einem Sender (9) des synchronen seriellen Kommunikationssystems (2) überprüft wird,
- bei Vorhandensein der Sendeanforderung ein Sendeprozess zum Senden des Datenrahmens (3) an das synchrone serielle Kommunikationssystem (2) vom Sender (9) initiiert wird, und
- nach Beendigung des Sendeprozesses wieder die Sendelückenzeit (10) vom Sender (9) abgewartet wird.

8. Empfänger (1) eines synchronen seriellen Kommunikationssystems (2), wobei der Empfänger (1) zum Durchführen eines Synchronisierungsprozesses ausgelegt ist, der eine periodische Überwachung des synchronen seriellen Kommunikationssystems (2) umfasst,
**dadurch gekennzeichnet, dass**
- der Empfänger (1) bei der periodischen Überwachung für einen Empfang mindestens eines Bytes eingerichtet ist, und eine jeweilige Periode der periodischen Überwachung eine vordefinierte Empfangslückenzeit (8) aufweist, während der der Empfänger (1) Bytes puffert, die über das synchrone serielle Kommunikationssystem (2) empfangen werden, und
- der Empfänger (1) so ausgelegt ist, dass er wartet, bis die vordefinierte Empfangslückenzeit (8) abgelaufen ist, und am Ende jeder Periode der periodischen Überwachung des synchronen seriellen Kommunikationssystems (2) eine jeweilige Periode auf einen Empfang mindestens eines Bytes durch den Empfänger (1) überprüft,
bis eine Periode ohne Empfang eines Bytes erkannt wird, und
- der Empfänger (1) so ausgelegt ist, dass er einen Rahmenempfangsprozess zum Empfangen des Datenrahmens (3) des synchronen seriellen Kommunikationssystems (2) initiiert.

9. Synchrones serielles Kommunikationssystem (2), umfassend mindestens einen Empfänger nach Anspruch 8 und mindestens einen Sender (9), wobei
der Sender (9) ausgelegt ist zum:
- periodischen Überprüfen eines Vorhandenseins einer Sendanforderung zum Senden eines Datenrahmens (3) bei Ablauf einer vordefinierten Sendelückenzeit (10),
- Initiieren eines Sendeprozesses zum Senden des Datenrahmens (3) an das synchrone serielle Kommunikationssystem (2) bei Vorhandensein der Sendeanforderung, und
- erneuten Abwarten der Sendelückenzeit (10) nach Beendigung des Sendeprozesses.

## Revendications

1. Procédé de synchronisation d'un récepteur (1) dans un système de communication série synchrone (2) pour recevoir une trame de données (3) d'une taille de trame prédéfinie (4) sur le système de communication série synchrone (2), dans lequel :
un processus de synchronisation comprenant une surveillance périodique du système de communication série synchrone (2) est exécuté par le récepteur (1), **caractérisé en ce que** :
dans la surveillance périodique, le récepteur (1) est configuré pour la réception d'au moins un octet, et
- une période respective de la surveillance périodique a un temps d'intervalle de réception prédéfini (8), pendant lequel le récepteur (1) place en mémoire tampon les octets reçus sur le système de communication série synchrone (2), et
- le récepteur (1) attend jusqu'à ce que le temps d'intervalle de réception prédéfini (8) ait expiré et, à la fin de chaque période de la surveillance périodique du système de communication série synchrone (2), la période respective est vérifiée relativement à la réception d'au moins un octet par le récepteur (1),
jusqu'à ce qu'une période sans réception d'un quelconque octet soit détectée par le récepteur (1), puis
- un processus de réception de trame pour recevoir la trame de données (3) du système de communication série synchrone (2) est lancé par le récepteur (1).

2. Procédé selon la revendication 1,
**caractérisé en ce que** :
la surveillance périodique du système de communication série synchrone (2) est effectuée à la fin de la réception d'une trame de données précédente (6) par l'intermédiaire du système de communication série synchrone (2) par le récepteur (1).

3. Procédé selon la revendication 2,
**caractérisé en ce que** :
lors du lancement ou pendant le processus de réception de trame, la trame de données précédente (6) reçue par l'intermédiaire du système de communication série synchrone (2) par le récepteur (1) est considérée comme valide et transmise à une couche supérieure ou inférieure d'un modèle de communication.

4. Procédé selon l'une des revendications précédentes,
**caractérisé en ce que** :
pour le processus de réception de trame, le récepteur (1) est configuré pour recevoir la trame de données (3) ayant la taille de trame prédéfinie (4).

5. Procédé selon la revendication 4,
**caractérisé en ce que** :
après la réception de la trame de données (3) ayant la taille de trame prédéfinie (4), le processus de réception de trame est terminé par le récepteur (1).

6. Procédé selon la revendication 5,
**caractérisé en ce que** :
à la fin du processus de réception de trame, la surveillance périodique du système de communication série synchrone (2) est à nouveau effectuée par le récepteur (1).

7. Procédé selon l'une des revendications précédentes,
**caractérisé en ce que** :
- lorsqu'un temps d'intervalle de transmission prédéfini (10) s'est écoulé, la présence d'une demande de transmission pour transmettre une trame de données (3) est vérifiée périodiquement par un émetteur (9) du système de communication série synchrone (2),
- lors de la présence de la demande de transmission, un processus de transmission pour transmettre la trame de données (3) au système de communication série synchrone (2) est initialisé par l'émetteur (9), et
- à la fin du processus de transmission, le temps d'intervalle de transmission (10) est à nouveau attendu par l'émetteur (9).

8. Récepteur (1) d'un système de communication série synchrone (2), où le récepteur (1) est configuré pour exécuter un processus de synchronisation comprenant une surveillance périodique du système de communication série synchrone (2), **caractérisé en ce que** :
- dans la surveillance périodique, le récepteur (1) est configuré pour une réception d'au moins un octet et une période respective de la surveillance périodique a un temps d'intervalle de réception prédéfini (8) pendant lequel le récepteur (1) place en mémoire tampon les octets reçus sur le système de communication série synchrone (2), et
- le récepteur (1) est configuré pour attendre jusqu'à ce que le temps d'intervalle de réception prédéfini (8) ait expiré et pour vérifier une période respective relativement à la réception d'au moins un octet par le récepteur (1) à la fin de chaque période de la surveillance périodique du système de communication série synchrone (2),
jusqu'à ce qu'une période sans réception d'un quelconque octet soit détectée, et
- le récepteur (1) est configuré pour lancer un processus de réception de trame pour recevoir la trame de données (3) du système de communication série synchrone (2).

9. Système de communication série synchrone (2), comprenant au moins un récepteur selon la revendication 8 et au moins un émetteur (9), où :
l'émetteur (9) est configuré pour :
- vérifier périodiquement la présence d'une demande de transmission pour transmettre une trame de données (3), après l'écoulement d'un temps d'intervalle de transmission prédéfini (10),
- initialiser un processus de transmission pour transmettre la trame de données (3) au système de communication série synchrone (2) en présence de la demande de transmission, et
- attendre à nouveau le temps d'intervalle de transmission (10) à la fin du processus de transmission.
